# EUROPEAN PATENT SPECIFICATION

(11) **EP 2 130 755 B1**
(45) Date of publication and mention of the grant of the patent: **11.12.2013**
(21) Application number: 09251096.5
(22) Date of filing: 15.04.2009
(51) Int. Cl.: B62K 21/22, B62K 25/08

(54) **Front wheel support structure of motorcycle**
Vorderradaufhängungsvorrichtung für ein Motorrad
Dispositif support de roue avant pour motocyclette

(30) Priority: 14.05.2008 JP 2008127268
(43) Date of publication of application: 09.12.2009
(73) Proprietor: Yamaha Hatsudoki Kabushiki Kaisha, Iwata-shi, Shizuoka 438-8501 (JP)
(72) Inventor: Eguchi, Munemitsu, Iwati-shi Shizuoka-ken 438-8501 (JP)
(74) Representative: Moreland, David

(56) References cited:
- FR-A- 2 901 227
- JP-A- 2 011 485
- JP-A- 3 136 989
- JP-U- 63 189 893
- US-A1- 2005 223 842

## Description

### FIELD OF THE INVENTION

The present invention relates to a motorcycle.

### BACKGROUND TO THE INVENTION

It is desirable that the position of handle grips should be adjustable according to a rider's physical size or the like. Accordingly, over the years several technologies have been developed for allowing the mounting position of handlebars to be altered in relation to the body frame. Japanese Unexamined Utility Model Registration Application Publication No. 60-34085 can be cited as one of conventional examples of such technologies. For these technologies, a matching pair of separate handlebars have brackets provided therein, and the brackets include through-holes formed therein, through which the upper ends of front forks are inserted. The brackets also include arc-shaped long or slotted holes formed concentrically with the through holes. With this arrangement, to adjust the position of the handle grips, bolts in the long holes are adjusted for proper position and then threaded into flange threaded holes formed at the upper ends of the front forks, thereby allowing the mounting angle of the handlebars (the position of the handle grips) to be set at a desired angle.

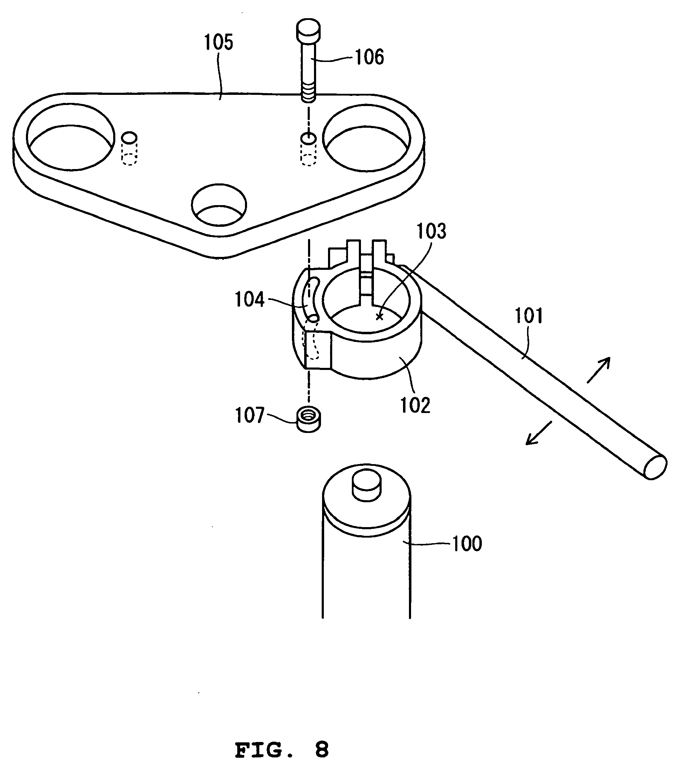

Typically, a high-speed type motorcycle includes handlebars mounted at a lower position since the rider needs to take a posture with the half of the body bent forward. As a result, the handlebars are mounted beneath a handle crown coupling a matching pair of front forks. With this arrangement, Fig. 8 shows the configuration for allowing the mounting angle of the handlebars to be adjusted as mentioned above. Namely, brackets 102 of handlebars 101 have through-holes 103 and long holes 104 concentrically formed therein, the through holes 103 being those through which front forks 100 are inserted and the long holes 104 being those for allowing mounting position adjustment. Then, from the back side of the brackets 102 of the handlebars 101, nuts 107 are tightened onto bolts 106 inserted through the handle crown 105.

Another example of a handlebar mounting is described by JP63-189893U, which teaches of a crown having a pair of fork through holes, the forks being inserted through the fork through holes and a pair of handlebars being attached to the forks below the crown. The handlebars are provided with a hole for receiving a member therethrough. The crown is provided with a plurality of holes that may be arranged to correspond to the hole in the handlebar to partially receive a portion of the member.

However, since there is no sufficient working space under the base of the handlebars, difficulties are experienced in attempting to access such working space, posing a problem of reduced working efficiency.

The present invention has been achieved to eliminate or reduce the above-mentioned drawbacks of the known art. An object of the present invention is to provide a motorcycle which allows the mounting position of handlebars to be adjusted with ease.

### SUMMARY OF THE INVENTION

Various aspects of the present invention are defined in the independent claim. Some preferred features are defined in the dependent claims.

An aspect of the present invention relates to a motorcycle which includes a matching pair of front forks for supporting a front wheel breadthwise therebetween, a handle crown having a pair of fork through-holes provided at either breadthwise end thereof and coupling both of the front forks at their upper ends, the front forks being inserted through the fork through-holes, and a matching pair of separate handlebars disposed beneath the fork through-holes and having tubular portions pivotably attached to the front forks, wherein the handle crown includes long hole shaped adjustment slots formed therein and wherein handlebars include mounting portions to which mounting components inserted through the adjustment slots are mounted.

The adjustment slots are formed in the handle crown so as to be arcuate, concentric with the fork through-holes and penetrate through the handle crown.

The mounting components include mounting bolts and the mounting portions include threaded portions into which the mounting bolts are threaded.

The tubular portions may include split portions formed therein and may include other mounting portions formed at either side of the split portions, to which other mounting components are attached, so as to project outwardly. The mounting portions may be formed at or in the vicinity of these other mounting portions.

The handle crown may include a handle shaft through-hole formed at the breadthwise centre thereof, through which a handle shaft for steering is inserted. Cutouts may be formed between the handle shaft through-hole and the fork through-holes so as to extend forward from the rear end of the handle crown. The adjustment slots may be located at the substantially same breadthwise position as the cutouts.

The handle crown may include the adjustment slots formed at the top surface thereof, and concave portions may be formed at the circumferential portion of the adjustment slots. At least part of the head of the mounting bolts may be housed in the concave portions.

The concave portions may include washers set therein, the washers having through-holes through which the shaft portions of the mounting bolts can be inserted. The washers may be fabricated with a material having a hardness equal to or higher than the handle crown.

The washers may be formed so as to be engageable with the concave portions. The through-holes may have a long circular shape so as to be communicable with the adjustment slots.

The washers may be of a size so as to be movable within the concave portions. The through-holes may have a circular shape through which the head of the mounting bolts can be inserted.

The through-holes may be disposed at the rear end of the washers. The concave portions may have a long hole, a circular arc shape and symmetrical ends. The through-holes may correspond to one end of the adjustment slots when the washers are fit into one end of the concave portions. The through-holes may correspond to the other lengthwise end of the adjustment slots when the washers are turned upside down and fit into the other lengthwise end of the concave portions. Also described herein by way of information is a motorcycle comprising:
a pair of front forks for supporting a front wheel breadthwise therebetween;
a handle crown having a pair of fork through-holes provided at either breadthwise end thereof and coupling both of the front forks at their upper ends, the front forks being inserted through the fork through holes, wherein the handle crown includes at least one arcuate adjustment slot formed therein;
a pair of separate handlebars disposed beneath the fork through-holes and having tubular portions pivotably attached to a respective front fork, wherein at least one handlebar includes a mounting portion; and
a mounting component inserted through the at least one adjustment slot to engage the mounting portion of the at least one handlebar.

The handle crown include two arcuate adjustment slots and each handlebar may include a mounting portion, such that a respective mounting component may extend through respective adjustment slots to engage respective mounting portions.

The adjustment slot is formed in the handle crown so as to be concentric with a fork through-hole and penetrate through the handle crown.

The mounting component comprises a mounting bolt and the mounting portion may include a threaded portion into which the mounting bolt is threaded.

The tubular portion of at least one handlebar may include a split portion formed therein, and may include other mounting portions formed at either side of the split portions. At least one other mounting component may be attached to the other mounting portions. The mounting portion of the at least one handlebar may be formed at or in the vicinity of these other mounting portions.

The handle crown may include a handle shaft through-hole formed at the breadthwise centre thereof, through which handle shaft through-hole a handle shaft for steering is inserted.

Cutouts may be formed between the handle shaft through-hole and the fork through-holes so as to extend forward from the rear end of the handle crown. The at least one adjustment slot may be located at the substantially same breadthwise position as the cutouts.

The handle crown may include the at least one adjustment slot formed at a top surface thereof. A concave portion may be formed at a circumferential portion of the adjustment slot, wherein at least part of the head of the mounting bolt may be housed in the concave portions.

The concave portion may include a washer set therein, the washer having a through-hole through which the shaft portion of the mounting bolt may be inserted. The washer may be fabricated with a material having a hardness equal to or higher than the handle crown.

The washer may be formed so as to be engageable with the concave portion. The through-hole may have an arcuate shape so as to be communicable with the at least one adjustment slot.

The washer may be of a size so as to be movable within the concave portion. The through-hole may have a circular shape through which the head of the mounting bolt can be inserted.

The through-hole may be disposed at the rear end of the washer, and the concave portion may have a long hole, a circular arc shape and symmetrical ends. The through-hole may correspond to one end of the at least one adjustment slot when the washer is fit into one end of the concave portion. The through-hole may correspond to the other lengthwise end of the at least one adjustment slot when the washer is turned upside down and fit into the other lengthwise end of the concave portion.

According to at least one aspect of the present invention, to adjust the mounting angle of the handlebars relative to the front forks, the tubular portions of the handlebars are turned by a desired angle about the front forks. Then, mountings components are inserted from the above through the adjustment slots and secured to the mounting portions. This easily accomplishes the mounting angle adjustment of the handlebars.

### BRIEF DESCRIPTION OF THE DRAWINGS

These and other aspects of the present invention will now be described, by way of example only, with reference to the accompanying drawings, in which:
Fig. 1 is a side view of an entire motorcycle according to an embodiment of the present invention;
Fig. 2 is a sectional view of installation of handlebars of the motorcycle of Fig. 1;
Fig. 3 is a plan view showing the mounting angle adjustment structure for handlebars;
Fig. 4 is a plan view of a handle crown;
Fig. 5 is a sectional view showing mounting structures of handlebars relative to front forks;
Figs. 6(A) and (B) are plan views showing the states where the position of mounting bolts is altered with washers turned upside down;
Fig. 7 is a plan view showing the state where the position of mounting bolts is altered using washers in other embodiments; and
Fig. 8 is a perspective view for explaining conventional problems in the art.

### DETAILED DESCRIPTION OF THE DRAWINGS

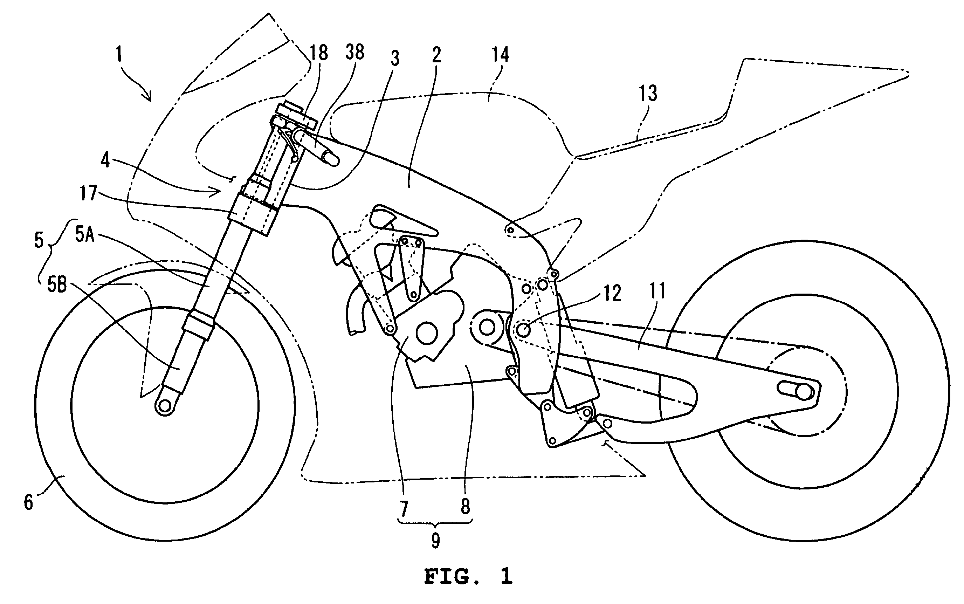

A first embodiment according to the present invention will be described below with reference to Figs. 1 through 6. A motorcycle 1 according to this embodiment includes a head pipe 3 mounted on the front end of a body frame 2. The head pipe 3 includes a steering system 4 mounted thereon, while front forks 5 provided in the steering system 4 support a front wheel 6 at the lower end thereof. The body frame 2 includes a drive unit 9 (an engine 7 and a transmission 8) mounted at the lower part thereof, and includes a rear swing arm 11 supporting a rear wheel 10 pivotably attached at its rear lower end to a pivot 12. Reference numeral 13 denotes a seat and 14 denotes a fuel tank.

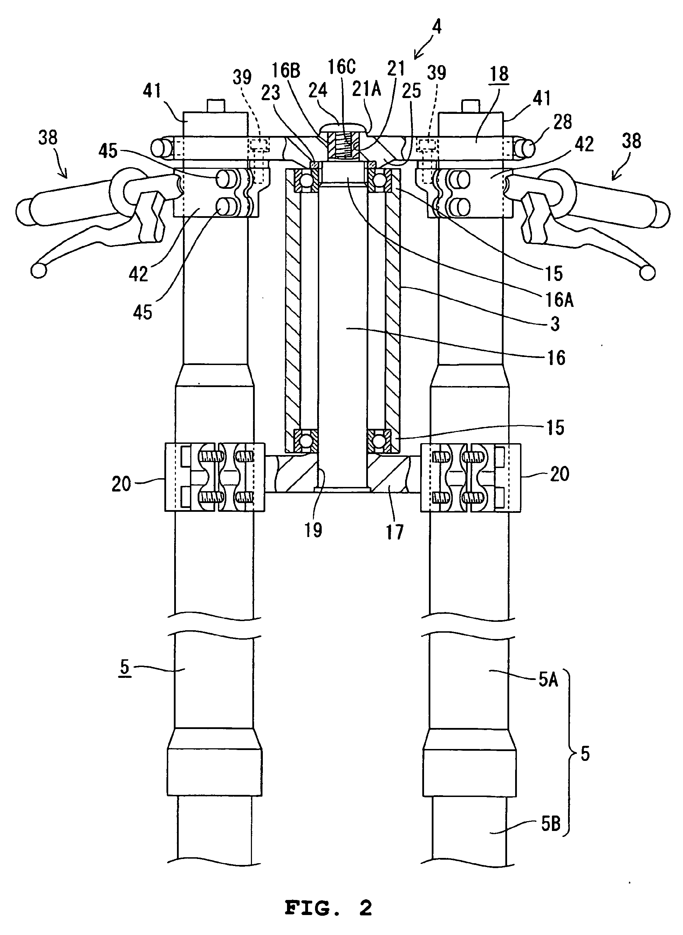

Fig. 2 shows the configuration of the steering system 4. The steering system 4 includes a handle shaft 16 rotatably inserted through the head pipe 3 with a bearing 15 in between and a lower bracket 17 mounted at the lower end of the handle shaft 16. In addition, the steering system 4 includes a handle crown 18 for coupling the upper ends of a matching pair of the front forks 5.

The front forks 5 have the front wheel 6 supported breadthwise therebetween and are positioned so as to face the longitudinal direction and be somewhat tilted backward. The front forks 5 include outer tubes 5A attached to the lower bracket 17 and the handle crown 18, and inner tubes 5B slidably inserted into the outer tubes 5A from the lower end of the outer tubes 5A. The inner tubes 5B support the axle of the front wheel 6 at the lower end thereof.

The lower bracket 17 includes a lower handle shaft through-hole 19 formed at the breadthwise centre thereof, into which the handle shaft 16 is pressed at its lower end. The lower bracket 17 includes a pair of cylindrically shaped lower fork through-holes 20 formed at both breadthwise ends thereof, through which the outer tubes 5A of the front forks 5 are inserted.

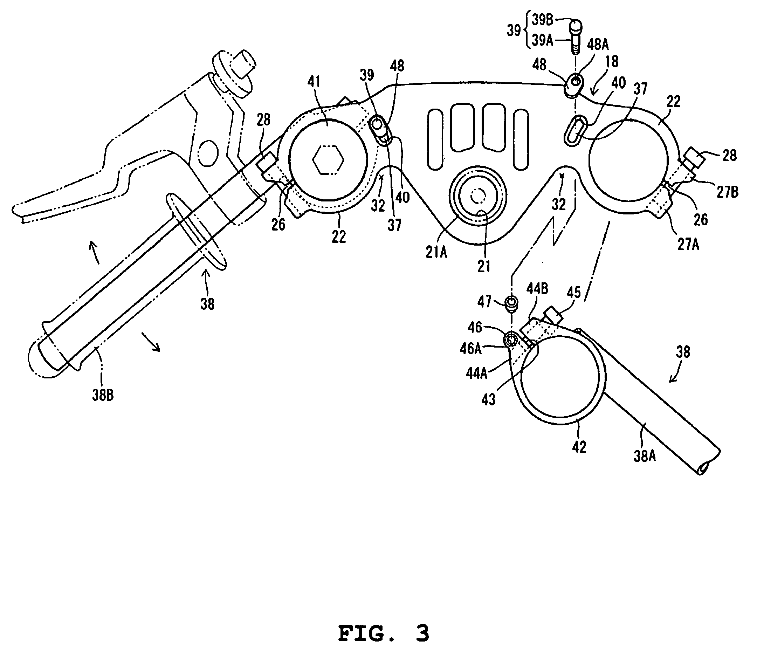

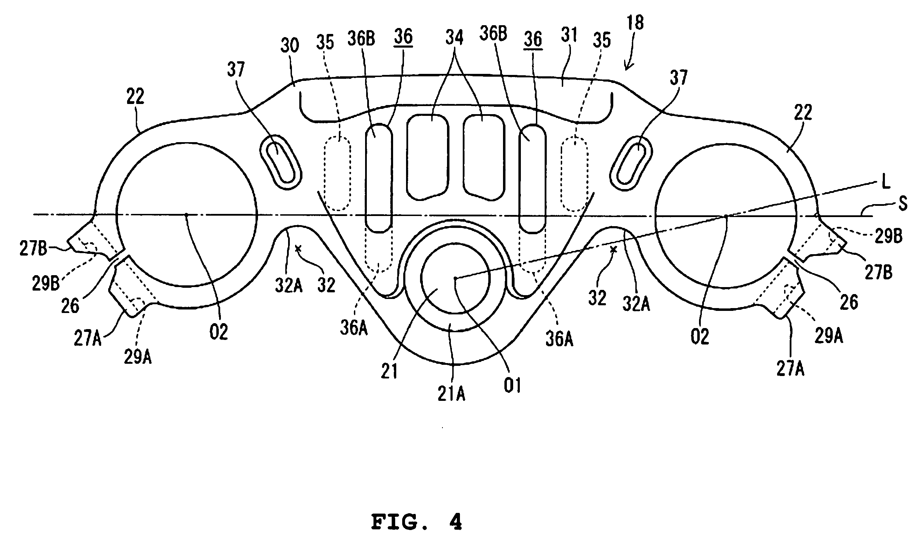

The handle crown 18 is made mainly of a magnesium material (or may be substituted by, for example, an aluminium material) so as to form a substantially flat plate. As shown in Figs. 3 and 4, the handle crown 18 includes an upper handle shaft through-hole 21 formed at the breadthwise centre thereof, through which the handle shaft 16 is inserted. An upwardly projecting conical base 21A is concentrically formed around the upper handle shaft through-hole 21. Also, the handle crown 18 includes a pair of upper fork through-holes 22 formed at both breadthwise ends thereof, through which the outer tubes 5A of the front forks 5 are inserted. As shown in Fig. 4, the centre 01 of the upper handle shaft through-hole 21 is disposed rearward of the axis line connecting between the centres 02 of the upper fork through-holes 22. The outer tubes 5A of the front forks 5 are inserted into the upper fork through-holes 22 so as to project upward. The projections of the outer tubes 5A include a thread formed on the inner circumferential surface thereof, into which caps 41 are threaded.

The structure for mounting the handle shaft 16 to the upper handle shaft through-hole 21 is shown in Fig. 2. According to Fig. 2, the handle shaft 16 includes a threaded portion 16A formed at the circumferential surface of the upper end thereof. In the threaded portion 16A, a nut 23 is tightened onto a portion upwardly projecting above the head pipe 3, the nut 23 pressing a bearing 15 against the handle shaft 16. The handle crown 18 includes a short tubular portion 25 projecting out from the back side thereof and concentrically encompassing the upper handle shaft through-hole 21 so that the nut 23 does not project to the outside. The handle shaft 16 includes a small-diameter portion 16B concentrically upwardly extending above the threaded portion 16A. This small-diameter portion 16B is inserted through the upper handle shaft through-hole 21. The small-diameter portion 16B includes a threaded hole 16C formed at its upper end along the axis thereof, into which a tap bolt 24 is threaded from the top surface of the handle crown 18.

The circumferential portions of the upper fork through-holes 22 include slits 26 radially extending obliquely backward. A pair of bolt tightening portions 27A, 27B are formed around the opened ends of the slits 26 so as to be opposed to each other. The bolt tightening portions 27A, 27B project radially outwardly and include concentric through-holes 29A, 29B, respectively, through which bolts 28 are inserted. The rearward through-holes 29A include threads. Tightening the bolts 28 into the through-holes 29A allows the handle crown 18 to be secured to the front forks 5. The lower fork through-holes 20 of the lower bracket 17 have a similar configuration, except that the lower bracket 17 includes two bolt tightening points, upper and lower, while the handle crown 18 includes one bolt tightening point.

The handle crown 18 includes an overhanging portion 30 formed at the front edge and the breadthwise centre thereof so as to overhang forward of the circumference of the upper fork through-holes 22. The overhanging portion 30 includes a forward declining tapered surface 31 formed at the top surface thereof.

The handle crown 18 includes a pair of cutouts 32 formed at the rear ends thereof so as to be close to the upper fork through-holes 22. The cutouts 32 include openings gradually increasing in width toward the vehicle rear from circular arc portions 32A formed at the innermost (vehicle front) portions thereof. Breadthwise outer wall surfaces defining the cutouts 32 are continuous with the circumferential surface of the upper fork through-holes 22. This allows the circumference of the upper fork through-holes 22 to have substantially equal thickness therealong within a predetermined angular range encompassing the slits 26, thereby making opening/closing motions of the upper fork through-holes 22 consistent over the predetermined angular range encompassing the slits 26.

As shown in Fig. 4, the cutouts 32 are designed to have a longitudinal cutout depth so that the front end of the circular arc 32A is located at a position slightly rearward of the axis line S connecting between the centres 02 of the upper fork through-holes 22 and slightly forward of the axis line L connecting between the centre 01 of the upper handle shaft through-hole 21 and the centres 02 of the upper fork through-holes.

The handle crown 18 includes a pair of large-width through-holes 34 formed at a position forward of the upper handle through-hole 21 so as to be disposed across the breadthwise central axis of the through-hole 21. Also, the handle crown 18 includes a pair of small-width bottomed-holes 35 formed at a position close to the breadthwise inner side of the cutouts 32 on the back side of the handle crown 18 and forward of the axis line S so as to be arranged along the longitudinal direction. Furthermore, there are provided mixed holes 36 having bottomed portions and through-hole portions between the bottomed-holes 35 and the large-width through-holes 34. The bottomed portions 36A are formed close to the breadthwise outside of the upper handle through-hole 21, while the through-hole portions 36B are formed at the extension of the bottomed portions with the same width.

The handle crown 18 includes adjustment slots 37 formed between the upper fork through-holes 22 and the adjacent bottomed-holes 35, the adjustment slots 37 being those for adjusting the mounting angle of the handlebars 38. The adjustment slots 37 are formed concentrically with the adjacent upper fork through-holes 22 so as to have a circular arc shape. Also, the adjustment slots 37 are located forward of the cutouts 32 and opposite to the slits 26 across the centres 02 of the upper fork through-holes 22. The adjustment slots 37 have a slot width slightly larger than the outer diameter of shaft portions 39A of mounting bolts 39 and smaller than heads 39B of the mounting bolts 39. Furthermore, the adjustment slots 37 have both lengthwise ends symmetrically formed and having a semicircular shape.

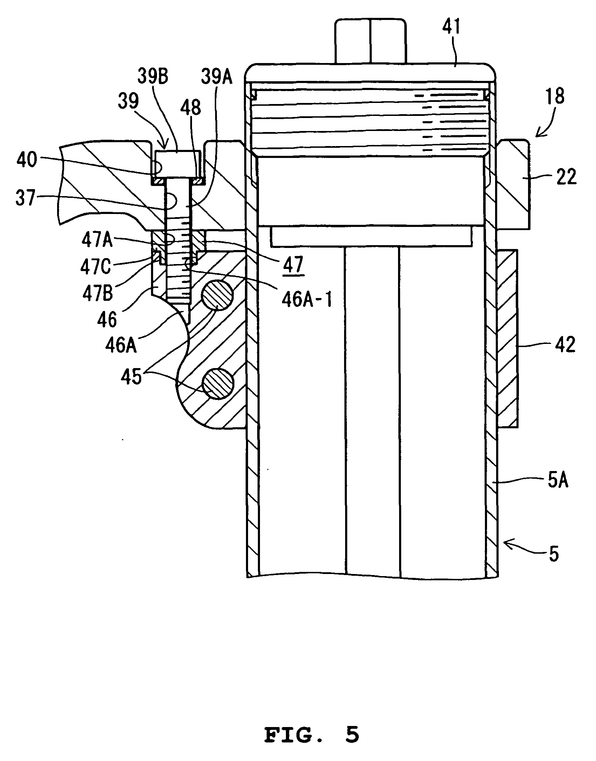

The handle crown 18 includes concave portions 40 formed in the top surface thereof at the circumferential portions of the adjustment slots 37. As shown in Fig. 5, the concave portions 40 are formed by making in the handle crown 18 a recess having a depth of approximately half of the thickness of the handle crown 18 in such a manner that heads 39B of the mounting bolts 39 do not project above the top surface of the handle crown 18. Also, the concave portions 40 have such a width so that the heads 39B of the mounting bolts 39 are slidably disposed inside the concave portions 40, and have bottoms of a uniform width formed over the entire region surrounding the open end of the adjustment slots 37. Furthermore, the concave portions 40 have both lengthwise ends symmetrically formed and having a semi-circular shape, like the adjustment slots 37.

The handlebars 38 are constituted by separate handlebars mounted at either side of the vehicle. The handlebars 38 include tubular portions 42 concentrically disposed under the upper fork through-holes 22 of the handle crown 18. The tubular portions 42 are formed so as to allow the upper tubes 5A of the front forks 5 to be inserted therethrough and include split slots 43 radially formed at the breadthwise inner side on the circumference thereof. A pair of holder portions 44A, 44B opposed to each other and radially projecting toward the outside are disposed at the open end of the split slots 43 with the split slots 43 in between. The holder portions 44A, 44B include a pair of holes, upper and lower, concentrically formed, through which two clamp bolts are inserted. Of the holder portions 44A, 44B, both of the rearward holder portions 44A include a thread formed therein. Accordingly, threading the clamp bolts 45 into the holder portions 44A, 44B reduces the diameter of the tubular portions 42, thereby securing the handlebars 38 to the front forks 5.

Arms 38A extend obliquely rearward from the circumferential surface of the tubular portions 42 at an eccentric position forward of the centre of the tubular portions 42. The arms 38A are fabricated with a tubular material and have one end cut in an arc shape so as to fit the circumference of the tubular portions 42 and are welded to the tubular portions 42. Also, the arms 38A include grips 38B mounted at the ends thereof.

The rearward ones of the holder portions 44A, 44B include cylindrically shaped threaded portions 46 formed at the breadthwise upper inner ends thereof for receiving the mounting bolts 39 and inwardly projecting from the outer surface of the holder portions 44A. The threaded portions 46 have threaded holes 46A formed thereinside along the axis thereof. The threaded holes 46A underlie and can be aligned with the adjustment slots 37. The shaft portions 39A of the mounting bolts 39 inserted through the adjustment slots 37 can be threaded at their lower end into the threaded portions 46A. In this embodiment, collars 47 are disposed between the threaded portions 46 and the handle crown 18 for adjusting the clearance therebetween. The collars 47 include through-holes 47 formed along the axis thereof so as to allow the shaft portions 39A of the mounting bolts 39 to be inserted. The collars 47 include small-diameter fitting tubular portions 47B formed at the lower ends thereof, the fitting tubular portions 47B being set in concave-shaped large-diameter portions 46A-1 formed at the upper part of the threaded holes 46A in the threaded portions 46, and include clearance retention portions 47C integrally formed at the part above the fitting tubular portions 47B, the clearance retention portions 47C being placed between the back side of the handle crown 18 and the top side of the handlebars 38.

In this embodiment, the concave portions 40 have washers 48 set therein, into which the mounting bolts 39 are threaded. The washers 49 are made of a material (for example, steel) having higher hardness than the handle crown 18 and have smaller dimensions than the concave portions 40.

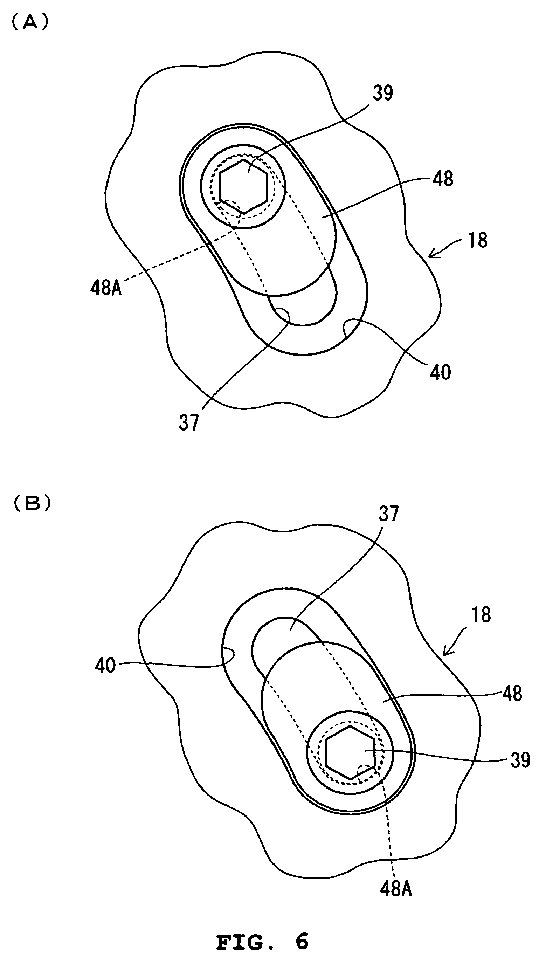

Specifically, the washers 48 have both ends symmetrically formed in semi-circular shape so as to fit both ends of the concave portions 40 and are movable within the concave portions 40. The washers 48 include circular through-holes 48A formed close to one lengthwise end thereof, through which the shaft portions 39A of the mounting bolts 39 are inserted. As shown in Fig. 6(A), when the washers 48 are attached firmly to one end of the concave portions 40, the through-holes 48A are adapted to correspond to and communicate with one end of the adjustment slots 37. While the washers 48 are being moved from the position as shown in Fig. 6(A) to the other end of the concave portions 40, the through-holes 48A can always correspond to and communicate with the adjustment slots 37. As mentioned above, since the through-holes 48A are located close to one lengthwise end of the washers 48, the through-holes 48A do not reach or are located before the other end of the adjustment slots 37 when the washers 48 are moved from the position as shown in Fig. 6(A) to the other end of the concave portions 40, if the washers 48 are not turned upside down. However, as shown in Fig. 6(B), if the washers 48 are turned upside down, the washers 48 are attached firmly to the other end of the concave portions 40, thereby allowing the through-holes 48A to correspond to and communicate with the other end of the adjustment slots 37.

The reason why the washers 48 are turned upside down is because locating the through-holes 48A at the lengthwise centre of the washers 48 with the total length of the washers 48 kept unchanged reduces the angular movement range of the mounting bolts 39, resulting in restrictions on the mounting angle adjustment range for the handlebars 38. Reducing the total length of the washers 48 is considered as a countermeasure against such restrictions. If such a countermeasure is used, there is a problem that the washers 48 cut into the bottoms of the concave portions 40 when the mounting bolts 39 are tightened, because the bottoms of the concave portions 40 provide a smaller area for sustaining pressure applied by the washers 48. This embodiment provides sufficient movement range for the mounting bolts 39 as well as prevents the washers 48 from cutting into the bottoms associated with tightening of the mounting bolts 39.

According to the present embodiment, mounting angle adjustment for the handlebars 38 is accomplished as set forth below. Before assembly to the vehicle, the handlebars 38 are integrated with the handle crown 18. That is, the mounting bolts 39 are inserted into the adjustment slots 37 through the washers 48, and are threaded into the threaded holes 46A of the threaded portions 46 via the collars 47. A matching pair of the handlebars 38 are secured to the handle crown 18 at a temporary mounting angle. At this time, the positions of the upper fork through-holes 22 concentrically match the position of the tubular portions 42 of the handlebars 38.

Then, the upper ends of the front forks 5 are inserted through the tubular portions 42 and the upper fork through-holes 22, and are fitted with the caps 41. At the same time, the smaller-diameter portion 16B of the handle shaft 16 is inserted through the upper handle shaft through-hole 21, and the tap bolt 24 is threaded into the smaller-diameter portion 16B. Then, clamp bolts 45 are slightly tightened, and the handlebars 38 are temporarily tightened so as to be rotatable about the front forks 5. After that, the mounting bolts 39 are loosened once before the mounting angle for the handlebars 38 is adjusted for a desired angle. During this adjustment, the mounting bolts 39 move within the adjustment slots 37. After this adjustment has been completed, the clamp bolts 45 are tightened to a specified torque with the handlebars 38 kept at a desired mounting angle, thereby establishing the mounting angle for the handlebars 38. Then, the mounting bolts 39 are tightened to a specified torque. This accomplishes the installation of the handlebars 38.

As mentioned above, this embodiment allows loosening and/or tightening of the mounting bolts 39 to be done from above the handle crown 18. Also, just threading into the threaded portions 46 accomplishes the adjustment, eliminating the need for an operator to thread nuts into the mounting bolts as is conventionally done. This makes the adjustment extremely easy and smooth.

This embodiment may provide additional positive effects such as:
(1) Since the adjustment slots 37 include concave portions 40 provided therearound, the heads 39B of the mounting bolts 39 do not project above the handle crown 18. This prevents the mounting bolts 39 from becoming useless projections.
(2) The intervention of the high-hardness washers 48 between the handle crown 18 and the mounting bolts 39 prevents the bottoms of the concave portions 40 from breaking at the time of tightening of the mounting bolts 39.
(3) Locating the through-holes 48A, through which the mounting bolts 39 are inserted, close to one end of the washers 48 as well as turning the washers 48 upside down allow the washers 48 to travel along the entire length of the adjustment slots 37. This arrangement enlarges the mounting angle adjustment range of the handlebars 38. In addition, it ensures that the washers 48 have a sufficient length, thereby allowing the washers 48 to have a greater area for sustaining a tightening torque exerted by the mounting bolts 39 and as a result effectively preventing the bottoms of the concave portions 40 from breaking.
(4) The disposition of the threaded holes 46A, into which the mounting bolts 39 are inserted, at the holder portions 44A formed at the tubular portions 42 of the handlebars 38 has the following meaning. When an attempt is made to secure the handlebars 38 to the front forks 5, tightening the clamp bolts 45 causes a wall portion constituting the tubular portions 42 to be subject to a tensile torque moving toward the split slots 43. If the threaded portions 46 are disposed at the opposite side across the split slots 43 in the tubular portions 42, tightening the clamp bolts 45 prevents a portion around the threaded portions 46 from elongating, deteriorating the circularity of the tubular portions 42. However, locating the threaded portions 46 at a portion, having no effects on elongation/deformation of the tubular portions 42, closer to the split slots 43 in the tubular portions 42 allows the tubular portions 42 to be reduced in diameter with their circularity kept unchanged, thereby ensuring mounting of the tubular portions 42 in relation to the front forks 5.
(5) Locating the adjustment slots 37 in front of the cutouts 32 provides the following effects. Namely, as described above, the cutouts 32 adequately reduce the rigidity of the handle crown 18, helping absorb lateral load exerted during high-speed cornering of motorcycles. Disposing void parts including the adjustment slots 37 and the concave portions 40 in front of the cutouts 32 adequately reduces the rigidity of an area forward of the cutouts 32. Cut-in (longitudinal cut-in length) of the cutouts 32 can be shortened to the degree that the adjusting slots 37 reduce the rigidity. As a result, the occurrence of cracks or "nest" in the cutouts 37 can be effectively suppressed at the time of the forming of the handle crown 18.

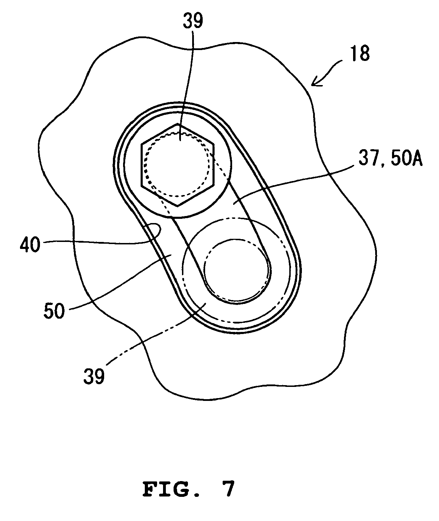

Fig. 7 shows a second embodiment of the present invention. This second embodiment includes modifications made to the length of the washers 50 and the shape of the through-holes 50A. Washers 50 are so formed to fit into the entire region of the concave portions 40. Unlike in the first embodiment, through-holes 50A have the same dimensions as the adjustment slots 37 so that they can correspond to and communicate with the adjustment slots 37 over the entire lengthwise region. Accordingly, unlike in the first embodiment, the washers 50 need not be moved within the concave portions 40 when an attempt is made to adjust the mounting position of the handlebars 38. The mounting position of the handlebars 38 can be adjusted by moving the shaft portions 39A of the mounting bolts 39 along the through-holes 48A and the adjustment slots 37.

Other configurations of the second embodiment are similar to the first embodiment, providing similar effects as in the first embodiment.

The present invention is not limited to the embodiments as mentioned above or shown in the drawings. For example, the following embodiments are covered by the technical scope of the present invention. In addition, other modifications other than described below can be implemented as long as they do not deviate from the substance of the present invention.
(1) The concave portions 40 need not be deep enough to fully house the head 39B of the mounting bolts 39. It just needs to be deep to the degree that projection height is appropriately reduced.
(2) The collars 47 are used as needed, and accordingly can be omitted.
(3) The threaded portions 46 are shown formed at the holder portions 44A (44B). However, they may be formed on the circumferential surface of the tubular portions 42 as long as they are close to the split slots 43.

### Reference Numerals

1: motorcycle
5: front fork
6: front wheel
16: handle shaft
18: handle crown
21: (upper) handle shat through-hole
22: (upper) fork through-hole
32: cutout
37: adjustment slot
38: handlebars
39: mounting bolt (mounting component)
40: concave portion
42: tubular portion
43: split slot (split portion)
44A, 44B: holder portion (other mounting portion)
45: clamp bolt (other component)
46: threaded portion (mounting portion)
48, 50: washer
48A, 50A: through-hole

## Claims

1. A motorcycle (1) comprising:
a pair of front forks (5) for supporting a front wheel (6) breadthwise therebetween;
a handle crown (18) having a pair of fork through-holes (22) provided at either breadthwise end thereof and coupling both of the front forks (5) at their upper ends, the front forks (5) being inserted through the fork through holes (22), wherein the handle crown (18) includes two adjustment slots (37) formed therein;
a pair of separate handlebars (38) disposed beneath the fork through-holes (22) and having tubular portions (42) pivotably attached to a respective front fork, wherein each handlebar (38) includes a mounting portion (46); and
respective mounting components (39) inserted through the respective adjustment slots (37) to engage the respective mounting portion (46) of each handlebar (38); wherein
the adjustment slots (37) are formed in the handle crown (18) so as to be arcuate, concentric with the respective fork through-hole (22) and penetrate through the handle crown (18); and
each mounting component (39) comprises a mounting bolt and each mounting portion (46) includes a threaded portion into which the respective mounting bolt is threaded.

2. The motorcycle (1) according to Claim 1, wherein the tubular portion (42) of at least one handlebar includes a split portion (43) formed therein and includes other mounting portions (44A, 44B) formed at either side of the split portion (43), to which other mounting portions (44A, 44B) at least one other mounting component (45) is attached, so as to project outwardly, wherein each mounting portion (46) of each handlebar (38) is formed at or in the vicinity of these other mounting portions (44A, 44B).

3. The motorcycle (1) according to any preceding Claim, wherein the handle crown (18) includes a handle shaft through-hole (21) formed at the breadthwise centre thereof, through which handle shaft through-hole (21) a handle shaft (16) for steering is inserted.

4. The motorcycle (1) according to Claim 3, wherein cutouts (32) are formed between the handle shaft through-hole (21) and the fork through-holes (22) so as to extend forward from the rear end of the handle crown (18), the adjustment slots (37) being located at substantially the same breadthwise position as the cutouts (32).

5. The motorcycle (1) according to any preceding Claim, wherein the handle crown (18) includes the adjustment slots (37) formed at a top surface thereof, and a respective concave portion (40) is formed at a circumferential portion of each adjustment slot (37), wherein at least part of a head (39B) of the respective mounting bolt can be housed in the respective concave portion (40).

6. The motorcycle (1) according to Claim 5, wherein each concave portion (40) includes a washer (48) set therein, the washer (48) having a through-hole (48A) through which a shaft portion (39A) of the respective mounting bolt can be inserted, said washer (48) being fabricated with a material having a hardness equal to or higher than that of the handle crown (18).

7. The motorcycle (1) according to Claim 6, wherein the washers (48) are formed so as to be engageable with the respective concave portion (40), and wherein each washer through-hole (48A) has an arcuate shape so as to be communicable with the respective adjustment slot.

8. The motorcycle (1) according to Claim 6 or 7, wherein the washers (48) are of a size so as to be movable within the respective concave portion (40), and the washer through-holes (48A) have a circular shape through which the head of the respective mounting bolt can be inserted.

9. The motorcycle (1) according to Claim 8, wherein the respective washer through-hole (48A) is disposed at the rear end of the respective washer (48), and each concave portion (40) has a long hole, a circular arc shape and symmetrical ends, and wherein the respective washer through-hole (48A) corresponds to one end of the respective adjustment slot (37) when the respective washer (48) is fit into one end of the respective concave portion (40), while the respective washer through-hole (48A) corresponds to the other lengthwise end of the respective adjustment slot (37) when the respective washer (48) is turned upside down and fit into the other lengthwise end of the respective concave portion (40).

## Patentansprüche

1. Motorrad (1), das Folgendes umfasst:
ein Paar von Vordergabelbeinen (5) zum Stützen eines Vorderrades (6) in Breitenrichtung zwischen denselben,
eine obere Gabelbrücke (18), die ein Paar von Gabelbein-Durchgangslöchern (22) hat, die an beiden Enden in Breitenrichtung derselben bereitgestellt werden und die beiden Vordergabelbeine (5) an deren oberen Enden koppeln, wobei die Vordergabelbeine (5) durch die Gabelbein-Durchgangslöcher (22) eingesetzt sind, wobei die obere Gabelbrücke (18) zwei Einstellschlitze (37) einschließt, die in derselben geformt sind,
ein Paar von gesonderten Lenkstangen (38), die unterhalb der Gabelbein-Durchgangslöcher (22) angeordnet sind und röhrenförmige Abschnitte (42) haben, die schwenkbar an dem jeweiligen Vordergabelbein befestigt sind, wobei jede Lenkstange (38) einen Anbringungsabschnitt (46) einschließt, und
jeweilige Anbringungsbauteile (39), die durch die jeweiligen Einstellschlitze (37) eingesetzt werden, um den jeweiligen Anbringungsabschnitt (46) jeder Lenkstange (38) in Eingriff zu nehmen, wobei
die Einstellschlitze (37) so in der oberen Gabelbrücke (18) geformt sind, dass sie bogenförmig sind, konzentrisch mit dem jeweiligen Gabelbein-Durchgangsloch (22), und durch die obere Gabelbrücke (18) hindurchdringen, und
jedes Anbringungsbauteil (39) einen Anbringungsbolzen umfasst und jeder Anbringungsabschnitt (46) einen mit Gewinde versehenen Abschnitt einschließt, in den der jeweilige Anbringungsbolzen geschraubt wird.

2. Motorrad (1) nach Anspruch 1, wobei der röhrenförmige Abschnitt (42) wenigstens einer Lenkstange einen in demselben geformten gespaltenen Abschnitt (43) einschließt und andere Anbringungsabschnitte (44A, 44B), die an beiden Seiten des gespaltenen Abschnitts (43) geformt sind, wobei an den anderen Anbringungsabschnitten (44A, 44B) wenigstens ein anderer Anbringungsabschnitt (45) so befestigt ist, dass er nach außen vorspringt, wobei jeder Anbringungsabschnitt (46) jeder Lenkstange (38) an diesen anderen Anbringungsabschnitten (44A, 44B) oder in deren Nähe geformt ist.

3. Motorrad (1) nach einem der vorhergehenden Ansprüche, wobei die obere Gabelbrücke (18) ein Gabelschaft-Durchgangsloch (21) einschließt, das an der Mitte in Breitenrichtung derselben geformt ist, wobei durch das Gabelschaft-Durchgangsloch (21) ein Gabelschaft (16) zum Lenken eingesetzt wird.

4. Motorrad (1) nach Anspruch 3, wobei Ausschnitte (32) zwischen dem Gabelschaft-Durchgangsloch (21) und den Gabelbein-Durchgangslöchern (22) so geformt sind, dass sie sich von dem hinteren Ende der oberen Gabelbrücke (18) nach vorn erstrecken, wobei die Einstellschlitze (37) an im Wesentlichen der gleichen Stellung in Breitenrichtung wie die Ausschnitte (32) angeordnet sind.

5. Motorrad (1) nach einem der vorhergehenden Ansprüche, wobei die obere Gabelbrücke (18) die Einstellschlitze (37) einschließt, die an einer oberen Fläche derselben geformt sind, und ein jeweiliger konkaver Abschnitt (40) an einem Umfangsabschnitt jedes Einstellschlitzes (37) geformt ist, wobei wenigstens ein Teil eines Kopfes (39B) des jeweiligen Anbringungsbolzens in dem jeweiligen konkaven Abschnitt (40) aufgenommen werden kann.

6. Motorrad (1) nach Anspruch 5, wobei jeder konkave Abschnitt (40) eine in denselben eingesetzte Scheibe (48) einschließt, wobei die Scheibe (48) ein Durchgangsloch (48A) hat, durch das ein Schaftabschnitt (39A) des jeweiligen Anbringungsbolzens eingesetzt werden kann, wobei die Scheibe (48) mit einem Werkstoff hergestellt ist, der eine Härte hat, die gleich derjenigen der oberen Gabelbrücke (18) oder höher als dieselbe ist.

7. Motorrad (1) nach Anspruch 6, wobei die Scheiben (48) so geformt sind, dass sie in Eingriff mit dem jeweiligen konkaven Abschnitt (40) gebracht werden können, und wobei jedes Scheibendurchgangsloch (48A) eine bogenförmige Gestalt hat, um so mit dem jeweiligen Einstellschlitz verbunden werden zu können.

8. Motorrad (1) nach Anspruch 6 oder 7, wobei die Scheiben (48) eine solche Größe haben, dass sie innerhalb des jeweiligen konkaven Abschnitts (40) bewegt werden können, und die Scheibendurchgangslöcher (48A) eine kreisförmige Gestalt haben, durch die der Kopf des jeweiligen Anbringungsbolzens eingesetzt werden kann.

9. Motorrad (1) nach Anspruch 8, wobei das jeweilige Scheibendurchgangsloch (48A) an dem hinteren Ende der jeweiligen Scheibe (48) angeordnet ist und jeder konkave Abschnitt (40) ein langes Loch, eine Kreisbogenform und symmetrische Enden hat und wobei das jeweilige Scheibendurchgangsloch (48A) einem Ende des jeweiligen Einstellschlitzes (37) entspricht, wenn die jeweilige Scheibe (48) in das eine Ende des jeweiligen konkaven Abschnitts (40) eingepasst ist, während das jeweilige Scheibendurchgangsloch (48A) dem in Längsrichtung anderen Ende des Einstellschlitzes (37) entspricht, wenn die jeweilige Scheibe (48) umgedreht und in das in Längsrichtung andere Ende des jeweiligen konkaven Abschnitts (40) eingepasst ist.

## Revendications

1. Motocycle (1), comprenant :
une paire de fourches avant (5), destinées à supporter une roue avant (6) dans le sens de la largeur entre elles ;
une couronne de poignée (18), comportant une paire de trous de passage des fourches (22) agencés au niveau de chaque extrémité dans le sens de la largeur et accouplant les deux fourches avant (5) au niveau de leurs extrémités supérieures, les fourches avant (5) étant insérées à travers les trous de passage des fourches (22), la couronne de poignée (18) englobant deux fentes d'ajustement (37) qui y sont formées ;
une paire de guidons séparés (38), agencés au-dessous des trous de passage des fourches (22) et comportant des parties tubulaires (42) fixées de manière pivotante sur une fourche avant respective, chaque guidon (38) englobant une partie de montage (46) ; et
des composants de montage correspondants (39), insérés à travers les fentes d'ajustement respectives (37) pour s'engager dans la partie de montage respective (46) de chaque guidon (38) ; dans lequel
les fentes d'ajustement (37) sont formées dans la couronne de poignée (18), de sorte à être arquées, concentriques par rapport au trou de passage de la fourche respective (22), et pénétrant à travers la couronne de poignée (18) ; et
chaque composant de montage (39) comprend un boulon de montage, et chaque partie de montage (46) englobe une partie filetée dans laquelle est fileté le boulon de montage respectif.

2. Motocycle (1) selon la revendication 1, dans lequel la partie tubulaire (42) d'au moins un guidon englobe une partie fendue (43) qui y est formée, et englobe d'autres parties de montage (44A , 44B), formées au niveau de chaque côté de la partie fendue (43), au moins un autre composant de montage (45) étant fixé sur ces autres parties de montage (44A, 44B), de sorte à déborder vers l'extérieur, chaque partie de montage (46) de chaque guidon (38) étant formée au niveau de ces autres parties de montage (44A, 44B) ou au voisinage de celles-ci.

3. Motocycle (1) selon l'une quelconque des revendications précédentes, dans lequel la couronne de poignée (18) englobe un trou de passage de l'arbre de poignée (21), formé au niveau du centre dans le sens de la largeur de celle-ci, un arbre de poignée (16) pour la direction étant inséré à travers ce trou de passage de l'arbre de poignée (21).

4. Motocycle (1) selon la revendication 3, dans lequel des entailles (32) sont formées entre le trou de passage de l'arbre de poignée (21) et les trous de passage des fourches (22), de sorte à s'étendre vers l'avant à partir de l'extrémité arrière de la couronne de poignée (18), les fentes d'ajustement (37) étant agencées au niveau d'essentiellement la même position dans le sens de la largeur que les entailles (32).

5. Motocycle (1) selon l'une quelconque des revendications précédentes, dans lequel la couronne de poignée (18) englobe les fentes d'ajustement (37) formées au niveau de sa surface supérieure, une partie concave respective (40) étant formée au niveau d'une partie circonférentielle de chaque fente d'ajustement (37), au moins une partie d'une tête (39B) du boulon de montage respectif pouvant être logée dans la partie concave respective (40).

6. Motocycle (1) selon la revendication 5, dans lequel chaque partie concave (40) englobe une rondelle (48) qui y est ajustée, la rondelle (48) comportant un trou de passage (48A), à travers lequel une partie d'arbre (39A) du boulon de montage respectif peut être insérée, ladite rondelle (48) étant fabriquée à partir d'un matériau ayant une dureté égale ou supérieure à celle de la couronne de poignée (18).

7. Motocycle (1) selon la revendication 6, dans lequel les rondelles (48) sont formées de sorte à pouvoir s'engager dans la partie concave respective (40); chaque trou de passage de la rondelle (48A) ayant une forme arquée, de sorte à communiquer avec la fente d'ajustement respective.

8. Motocycle (1) selon les revendications 6 ou 7 ; dans lequel les rondelles (48) ont une taille telle à pouvoir se déplacer dans la partie concave respective (40), les trous de passage des rondelles (48A) ayant une forme circulaire, à travers laquelle la tête d'un boulon de montage respectif peut être insérée.

9. Motocycle (1) selon la revendication 8, dans lequel le trou de passage de la rondelle respective (48A) est agencé au niveau de l'extrémité arrière de la rondelle respective (48), chaque partie concave (40) comportant un trou oblong, ayant une forme en arc circulaire et des extrémités symétriques, et dans lequel le trou de passage de la rondelle respective (48A) correspond à une extrémité de la fente d'ajustement respective (37) lorsque la rondelle respective (48) est ajustée dans une extrémité de la partie concave respective (40), le trou de passage de la rondelle respective (48A) correspondant à l'autre extrémité dans le sens de la longueur de la fente d'ajustement respective (37) lorsque la rondelle respective (48) est tournée à l'envers et ajustée dans l'autre extrémité dans le sens de la longueur de la partie concave respective (40).
